# EUROPÄISCHE PATENTANMELDUNG

(11) **EP 1 715 305 A1**
(43) Veröffentlichungstag der Anmeldung: **25.10.2006**
(21) Anmeldenummer: 06112690.0
(22) Anmeldetag: 18.04.2006
(51) Int. Cl.: G01F 23/30

(54) **Sensoreinheit**

(30) Priorität: 18.04.2005 DE 102005018009
(71) Anmelder: MANN+HUMMEL GmbH, 71638 Ludwigsburg (DE)
(72) Erfinder: Limousin, Eric, 53000, Laval (FR); Tremblay, Guy, 53000, Laval (FR)

(57) **Zusammenfassung**

Die Erfindung betrifft eine Sensoreinheit zur Erfassung eines Zustandes. Dazu sind mehrere elektrisch leitfähige Kontaktelemente in einen Trägerkörper eingebettet. Die Kontaktelemente werden durch eine Widerstandseinheit mit einem definierten elektrischen Widerstand miteinander verbunden. Der Trägerkörper ist aus einem elektrisch leitfähigen Material gebildet und dient gleichzeitig als Widerstandseinheit.

## Beschreibung

Die Erfindung betrifft eine Sensoreinheit zur Erfassung eines Zustandes gemäß dem Oberbegriff des Patentanspruchs 1.

Sensoren dieser Art bestehen aus mehreren elektrisch leitfähigen Kontaktelementen. Abhängig vom Vorhandensein eines Zustandes, wie beispielsweise eines Mediums oder eines Kontaktkörpers, wird zwischen den Kontaktelementen ein Stromkreis geschlossen oder geöffnet. Um eine sichere Funktion dieser Sensoreinheit zu gewährleisten, muss geprüft werden können, ob die Kontaktelemente mit einer dazugehörigen Schalteinheit bzw. einer Elektronik leitfähig verbunden sind. Um die Funktionsfähigkeit dieser Verbindungen zu den Kontaktelementen hin zu überprüfen, ist es aus dem Stand der Technik bekannt, die einzelnen Kontaktelemente mit definierten elektrischen Widerständen zu überbrücken. Im Falle eines Kabelbruches, einer oxidierten oder verschmutzten Verbindung ist der vordefinierte Widerstandswert dann nicht mehr erfassbar und es wird eine Störung der Sensoreinheit angezeigt. Diese Anordnung wird beispielsweise von der Firma Meder zur Überprüfung der Verbindung einer Sensorik von Reedkontakten in Sensoren zur Erfassung von Flüssigkeitspegeln angewandt. Nachteilig dabei ist, dass ein spezieller Widerstand unmittelbar mit den Kontaktelementen leitfähig verbunden werden muss, wodurch ein zusätzlicher Aufwand für Material und Montage entsteht.

Aufgabe der Erfindung ist es, die beschriebenen Nachteile zu vermeiden und eine Sensoreinheit zu schaffen, die durch den Widerstandswert der Kontaktelemente jederzeit überprüfbar ist, eine hohe Zuverlässigkeit aufweist sowie kostengünstig und einfach herstellbar ist. Diese Aufgabe wird durch die Merkmale des Patentanspruchs 1 erfüllt.

Die erfindungsgemäße Sensoreinheit verfügt über einen Trägerkörper aus einem, zumindest teilweise, elektrisch leitfähigen Material. Dieses Material kann z. B. ein mit Partikeln oder Fasern gefüllter Kunststoff sein. Um dieses elektrisch leitfähige Material kann eine elektrisch isolierende Schicht, insbesondere eine elektrisch isolierende Kunststoffschicht, angeordnet sein. Weiterhin kann der Trägerkörper jedoch auch aus einem elektrisch leitfähigen Kern aus Metall mit einer elektrisch isolierenden Schicht aus z. B. einem isolierenden Kunststoff bestehen. In dem elektrisch leitfähigen Material des Trägerkörpers sind Kontaktelemente fixiert, wodurch die Kontaktelemente zueinander in einem definierten Abstand positioniert sind. Die Kontaktelemente bestehen aus einem elektrisch leitfähigen Material, vorzugsweise mit einem geringen elektrischen Widerstandswert, wie z. B. Kupfer oder Kupferlegierungen. Die Kontaktelemente können beliebige Geometrien, z. B. stabförmig, rohrförmig oder plattenförmig ausgebildet sein, hierbei sind die Kontaktelemente elektrisch leitend mit dem leitfähigen Material des Trägerkörpers verbunden. Die Kontaktelemente können in den vorgefertigten Trägerkörper nachträglich durch z. B. Schrauben, Kleben, Stecken oder Schweißen, eingebracht sein. Alternativ zum nachträglichen Einbringen der Kontaktelemente in den Trägerkörper können die Kontaktelemente jedoch auch als Einlegeteil in ein Werkzeug eingebracht und mit dem Trägerkörper umspritzt werden. Das elektrisch leitfähige Material des Trägerkörpers bildet somit einen elektrischen Widerstand zwischen den mindestens zwei Kontaktelementen. Der definierte elektrische Widerstandswert des Trägerkörpers kann durch die Anteile der elektrisch leitfähigen Fasern und die Geometrie bzw. den Abstand der Kontaktelemente zueinander auf einen definierten Wert eingestellt werden. Weiterhin kann der Trägerkörper über Befestigungsbereiche verfügen, mit welchen die Sensoreinheit an einer Gehäusestruktur, wie z. B. einem Behälter befestigt werden kann. Somit sind keine zusätzlichen Bauteile erforderlich, und die Sensoreinheit ist einfach und kostengünstig herstellbar. Weiterhin ist die Sensoreinheit durch den erfindungsgemäßen Aufbau auch in kleine Bauräume einbringbar.

Durch den erfindungsgemäßen Aufbau der Sensoreinheit kann durch Anlegen einer Spannung an den Kontaktelementen und dem daraus resultierenden Stromfluss die Funktionsfähigkeit der Sensoreinheit überprüft werden. Solange die Kontaktelemente über keinen Kontakt zu elektrisch leitfähigen Gegenständen oder Flüssigkeiten, wie z.B. Wasser oder Bremsflüssigkeit verfügen, fließt kein Strom über die aus dem Trägerkörper hinausragenden Teile der Kontaktelemente. Da die Kontaktelemente jedoch elektrisch leitend mit dem elektrisch leitfähigen Material des Trägerkörpers verbunden sind, fließt über diese Verbindung und das elektrisch leitfähige Material ein geringer Strom. Durch diesen geringen Strom, wobei die zugehörige Stromkennlinie innerhalb einer voreinstellbaren Bandbreite liegt, ist die Funktionalität der Sensoreinheit erfassbar. Sobald die Kontaktelemente mit der elektrisch leitenden Flüssigkeit oder einem elektrisch leitenden Gegenstand in Kontakt stehen, fließt ein größerer Strom, wodurch die Stromkennlinie die voreingestellte Bandbreite überschreitet. Somit ist das Vorhandensein der Flüssigkeit bzw. deren Pegelstand erfassbar. Unterschreitet die Stromkennlinie die vorgegebene Bandbreite, ist dies ein Anzeichen dafür, dass die Sensoreinheit nicht funktionsbereit ist. Hierbei kann ein Fehlersignal ausgegeben werden, welches ein Überprüfen der Sensoreinheit fordert. Die erfindungsgemäße Sensoreinheit kann also zur Erfassung von Flüssigkeiten verwendet werden, wobei die Sensoreinheit selbst, ohne weitere Bauteile, zur Überprüfung der Funktionsfähigkeit verwendbar ist.

Bei einer Weiterbildung der Erfindung wird für den Trägerkörper Polyamid, Polypropylen oder ein anderer aus dem Stand der Technik bekannter Kunststoff, der zur Herstellung von Trägerkörpern von Kontaktelementen geeignet ist, verwendet. Durch diese Materialauswahl kann die geforderte Werkstoffeigenschaft hinsichtlich mechanischer bzw. thermischer Belastung, Medienbeständigkeit und Formstabilität optimal abgestimmt werden.

In einer weiteren Ausgestaltung werden dem Material des Trägerkörpers elektrisch leitfähige Materialien, wie z. B. Kohlefasern, Rußpartikel, Edelstahlfasern, -partikel, Stahlfasern, -partikel, beigemengt. Zur Optimierung der Materialeigenschaft, insbesondere der elektrischen Leitfähigkeit, können selbstverständlich auch mehrere elektrisch leitfähige Materialien gleichzeitig beigemengt werden. Durch die Beimengung bzw. die Abstimmung der Faseranteile untereinander wird die Abstimmung auf einen gewünschten Widerstandswert erleichtert. Beispielsweise wird bei einer 30 %-igen Beimengung von Kohlenstofffasern in ein Polyamid 6.6 ein Widerstandswert zwischen zwei silberbeschichteten Kontaktelementen von 7 und 12 Ohm erreicht. Eine 20 %-ige Beimengung von Kohlenstofffasern zu Polyamid 6.6 erreicht einen Widerstandswert von zwischen 25 und 50 Ohm.

Eine weitere konstruktive Ausgestaltung der Sensoreinheit sieht vor, dass der Trägerkörper über eine Flanschkontur verfügt, mit welcher die Sensoreinheit an einer Einbaustruktur, insbesondere einer Behälterwand, flüssigkeitsdicht befestigbar ist. Diese Flanschkontur ist bei einer vorteilhaften Ausgestaltung direkt an den Trägerkörper angeformt. Die Dichtheit der Verbindung zwischen Flanschkontur und Einbaustruktur kann auch dadurch erreicht werden, dass an der Flanschkontur Geometrien, beispielsweise Nuten, vorgesehen sind, die zur Aufnahme von Dichtelementen, wie z. B. O-Ringe, Flachdichtringe oder Formdichtungen, geeignet sind. Die Sensoreinheit kann somit in einer Öffnung eines Gehäuses eingebracht werden, wobei diese Öffnung dichtend durch den Trägerkörper verschließbar ist. Dabei kann die Flanschkontur dergestalt sein, dass sie leicht lösbar bzw. demontierbar ist, wodurch die Sensoreinheit leicht ausgetauscht werden oder als Ab-lass-, Einfüll- oder Referenzöffnung dienen kann. Diese leichte Demontierbarkeit ist beispielsweise durch einen Bajonettverschluss realisierbar.

In einer weiteren Ausgestaltungsform ist die Sensoreinheit Teil eines Füllstandsensors, welcher zur Überprüfung beispielsweise eines Flüssigkeitspegels genutzt wird. Zur Überprüfung von Flüssigkeitspegeln werden Schwimmerkörper verwendet, die im Bereich der Oberfläche der Flüssigkeit schwimmen und in Abhängigkeit des Flüssigkeitspegels absinken oder aufsteigen. Der Schwimmerkörper verfügt zumindest teilweise über einen elektrisch leitfähigen Bereich, wie z. B. Kontaktstreifen, der bei Unter- oder Überschreiten eines Flüssigkeitspegels mit den Kontaktelementen der Sensoreinheit in Verbindung kommt und diese dadurch elektrisch überbrückt. Somit verändert sich die Stromkennlinie. Dadurch kann ein Maximalstand oder ein Minimalstand eines Flüssigkeitspegels erfasst werden.

Gemäß einer weiteren Variante der Erfindung ist die Sensoreinheit selbst ein Füllstandsensor. Dies ist insbesondere bei Flüssigkeiten möglich, welche eine hohe elektrische Leitfähigkeit aufweisen. Die Sensoreinheit erfasst dann das Vorhandensein einer Flüssigkeit, wenn die beiden Kontaktelemente durch die Flüssigkeit miteinander kontaktiert werden. Somit wird eine charakteristische Stromkennlinie erzeugt, anhand welcher der Füllstand ermittelbar ist. Dadurch ist es möglich, die Sensoreinheit ohne zusätzliche mechanische bewegliche Elemente zur Überprüfung eines Flüssigkeitspegels zu nutzen.

In einer weiteren Ausführungsform wird die Sensoreinheit in einem Bremsflüssigkeitsbehälter zur Überprüfung des Bremsflüssigkeitspegels verwendet, wobei in diesem Fall ein Schwimmerkörper notwendig ist. In diesem Einsatzbereich werden insbesondere die hohe Zuverlässigkeit der Widerstandseinheit sowie die hohe chemische Beständigkeit der verwendeten Kunststoffe genutzt.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Ein Ausführungsbeispiel der Erfindung wird nachfolgend anhand der Zeichnungen erläutert.
Hierbei zeigen:
- Figur 1: eine Sensoreinheit im Vollschnitt,
- Figur 2: eine in einem Behälter eingebaute Sensoreinheit.

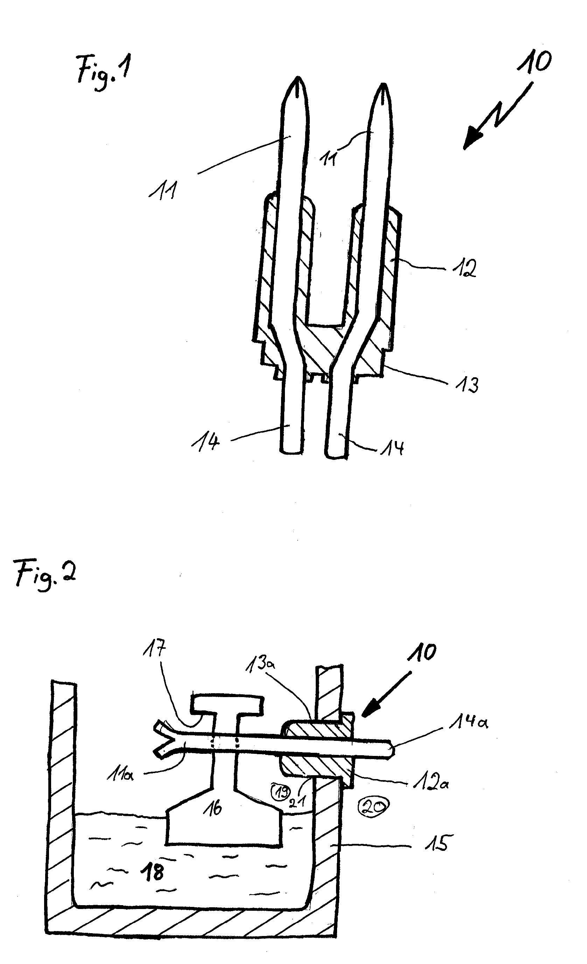

Figur 1 zeigt eine Sensoreinheit 10 im Vollschnitt, in welcher die Kontaktelemente 11 in einem Trägerkörper 12 eingebettet sind. Der Trägerkörper 12 weist einen Flanschbereich 13 auf, der zur dichten Verbindung mit einer nicht dargestellten Behälterkontur vorgesehen ist. Dem aus einem Kunststoff hergestellten Trägerkörper 12 können in einem Teilbereich wie beispielsweise im Bereich der Flanschkontur 13 elektrisch-leitfähige Fasern oder Partikel beigemengt werden, welche einen definierten Widerstandswert bewirken. Die Kontaktelemente 11 sind mit Anschlusskonturen 14 verbunden, welche zur Kontaktierung mit einer nicht dargestellten Spannungsquelle vorgesehen. Die Anschlusskonturen 14 können zur Kontaktierung mit der Spannungsquelle beispielsweise geschraubt, gesteckt, gelötet oder umspritzt werden. Die Kontaktelemente 11 sind üblicherweise aus Metall hergestellt und können beispielsweise durch Berührung eines in Figur 2 dargestellten Schwimmerkontaktes 17 oder durch das Vorhandensein eines elektrischleitfähigen Mediums miteinander kontaktiert werden, wodurch sich die Stromkennlinie ergibt. Anhand der Stromkennlinie ist der Flüssigkeitspegel mit einer Auswerteeinheit ermittelbar.

Die Figur 2 zeigt in schematischer Darstellung die Sensoreinheit 10 gemäß Figur 1, welche an einem Behälter 15 fixiert ist. Der Figur 1 entsprechende Bauteile sind mit den gleichen Bezugszeichen versehen. Beim Behälter 15 handelt es sich um einen geschlossenen Behälter 15, der eine Innenseite 19 von einer Außenseite 20 trennt und in seinem Inneren eine Flüssigkeit 18 bevorratet. In der Flüssigkeit 18 schwimmt ein Schwimmkörper 16, an welchem eine Kontaktfläche 17 angeordnet ist. Der Trägerkörper 12a korrespondiert mit seiner Flanschkontur 13a mit einer Öffnung 21 des Behälters 15, wodurch diese dichtend verschlossen ist. Die Kontaktelemente 11a durchdringen den Trägerkörper 12a und bilden an der Außenseite 20 die eine Anschlusskontur 14a. Die Kontakt-elemente 11a sind dabei gemäß Figur 1 in der Seitenansicht dargestellt, wodurch es sich um zwei parallel nebeneinander in dem Trägerkörper 12a angeordnete Kontaktelemente 11a handelt. Diese Kontaktelemente 11a korrespondieren mit dem Schwimmkörper 16 derart, dass der Schwimmköper 16 bei einem Absinken des Flüssigkeitspegels mit seinen Kontaktflächen 17 mit den Kontaktelementen 11a in Berührung kommt und diese elektrisch miteinander verbindet.

## Patentansprüche

1. Sensoreinheit zur Erfassung eines Zustandes, aufweisend mehrere elektrisch-leitfähige Kontaktelemente, einen Trägerkörper, in welchem die Kontaktelemente eingebettet sind und eine Widerstandseinheit, die mit den Kontaktelementen verbunden ist, wobei die Widerstandseinheit einen definierten elektrischen Widerstand aufweist, **dadurch gekennzeichnet, dass** der Trägerkörper selbst die Widerstandseinheit ist.

2. Sensoreinheit nach Anspruch 1, **dadurch gekennzeichnet, dass** der Trägerkörper aus Polyamid oder Polypropylen gebildet ist.

3. Sensoreinheit nach einem der vorhergehenden Ansprüche, **dadurch gekennzeichnet, dass** dem Material des Trägerkörpers elektrisch leitfähige Materialien, insbesondere Kohlefasern, Ruß, Edelstahlfasern oder Stahlfasern, beigemengt sind.

4. Sensoreinheit nach einem der vorhergehenden Ansprüche, **dadurch gekennzeichnet, dass** der Trägerkörper über eine Flanschkontur verfügt, durch welche die Sensoreinheit an einer Einbaustruktur dichtend befestigbar ist.

5. Sensoreinheit nach einem der vorhergehenden Ansprüche, **dadurch gekennzeichnet, dass** die Sensoreinheit Teil eines Füllstandsensors ist.

6. Sensoreinheit nach Anspruch 5, **dadurch gekennzeichnet, dass** die Kontaktelemente eine Auflagefläche für einen Schwimmer bilden, und durch Anliegen des Schwimmers elektrisch überbrückt sind.

7. Sensoreinheit nach einem der vorhergehenden Ansprüche 1 bis 4, **dadurch gekennzeichnet, dass** die Sensoreinheit ein Füllstandsensor ist.

8. Sensoreinheit nach einem der vorhergehenden Ansprüche, **dadurch gekennzeichnet, dass** die Sensoreinheit in einen Bremsflüssigkeitsbehälter eingebaut ist.
